# EUROPEAN PATENT APPLICATION

(11) **EP 2 429 117 A2**
(43) Date of publication of application: **14.03.2012**
(21) Application number: 11177434.5
(22) Date of filing: 12.08.2011
(51) Int. Cl.: H04L 9/32

(54) **Cryptographic device management method, cryptographic device management server, and program**

(30) Priority: 14.09.2010 JP 2010205053
(71) Applicant: Hitachi Ltd., Tokyo 100-8280 (JP)
(72) Inventor: Sato, Akane, Tokyo, 100-8220 (JP); Fujishiro, Takahiro, Tokyo, 100-8220 (JP); Furuya, Masahiko, Tokyo, 100-8220 (JP); Ogawa, Masami, Tokyo, 100-8220 (JP)
(74) Representative: MERH-IP Matias Erny Reichl Hoffmann

(57) **Abstract**

A cryptographic device management server (12) receives a first cryptographic calculation request from an arbitrary terminal device (11m) via a network (14), transmits a second cryptographic calculation request generated on the basis of the first cryptographic calculation request, management information of the terminal device and management information of the cryptographic device to a cryptographic device (13n) selected on the basis of the management information of the terminal devices and management information of the cryptographic devices stored in the cryptographic device management server (12), via a connection interface (15), receives a second cryptographic calculation result from the cryptographic device (13n), and transmits a first cryptographic calculation result generated on the basis of the second cryptographic calculation result, the management information of the terminal device and the management information of the cryptographic device to the terminal device (11m) of the source of the first cryptographic calculation request via the network (14).

## Description

### BACKGROUND OF THE INVENTION

The present invention relates to a technique for preserving a common key in a common key crypto-system and a private key in a public key crypto-system securely and conducting a cryptographic calculation without leaking the common key or the private key to external.

Services utilizing the Internet (hereafter referred to as on-line services) such as an electronic application and an electronic declaration in administration procedures, electronic commerce, on-line banking and on-line shopping have spread. In on-line services, however, there are threats such as impersonating another person, illegal interception or falsification of an electronic document flowing on the Internet, and an ex post denial of a contract or application contents. Therefore, countermeasures are taken against the threats by executing "authentication" for assuring that the opposite party of communication is legal, "encryption" for preventing illegal interception on a communication path, and "digital signature" for assuring authenticity of an electronic document. In implementing the "authentication," "encryption," and "digital signature," cryptographic technology such as the common key crypto-system and public key crypto-system become infrastructure technology.

For effectively executing the countermeasures, it is necessary to preserve the common key in the common key crypto-system and the private key in the public key crypto-system securely, and conduct a cryptographic calculation without leaking the common key or the private key to external. Therefore, tamper-resistant hardware dedicated for cryptographic calculation (hereafter referred to as cryptographic device) such as an IC card, a hardware security module, and a USB token is utilized when implementing on-line service securely.

In utilization of a cryptographic device, commands for accessing a cryptographic device and conducting a cryptographic calculation differ from cryptographic device to cryptographic device. In applications for providing on-line service, therefore, a function for accessing the cryptographic device is implemented every cryptographic device. With the object of securing mutual operability of applications and cryptographic devices, therefore, an arrangement in which a common interface is provided between the applications and the cryptographic devices is used. Owing to the arrangement for making common, the applications may implement the cryptographic function on the common interface. In that case, it is necessary to install a library for converting a command in the common interface to a command specific to the cryptographic device, in a terminal device which executes an application. Specifications of PKCS #11 which is one of common crypt-interfaces are described in detail in "PKCS #11 v2.20: Cryptographic Token Interface Standard, June 2004" (related document 1).

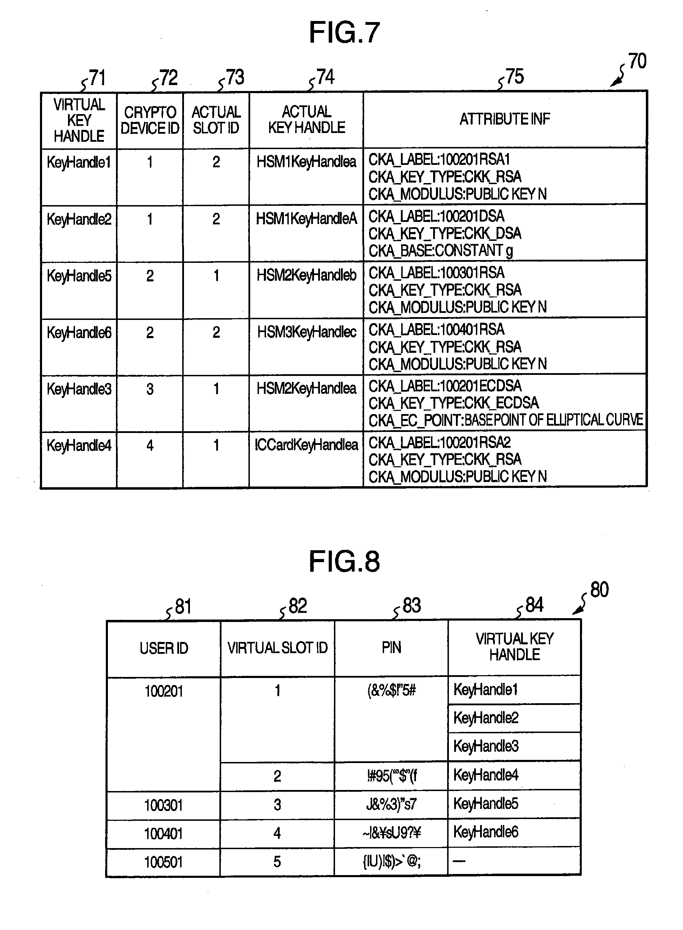

A conventional cryptographic device takes a form in which it is connected to a physical interface such as a USB or a PCI of a terminal device which executes an application in one-to-one correspondence and utilized. As terminal devices are installed additionally, it is necessary to install cryptographic devices as well additionally, resulting in a high cost load. Therefore, a technique in which a plurality of terminal devices share a cryptographic device via a network is disclosed in WO2004/008676 (corresponding to US2006/0149962A1 Fountain et al.)(related document 2). In addition, in the related document 2, an embodiment in which a plurality of cryptographic devices are connected on a network and the cryptographic devices are utilized by a plurality of terminal devices with the object of dispersing the load is shown in FIG 7.

On the other hand, it is pointed out that there is a problem in security of a part of encryption algorithms utilized in cryptographic calculations of "authentication," "encryption," "digital signature" and the like and public keys having short key lengths, because of advance of cryptanalysis technology and computer capabilities in recent years. The National Institute of Standards and Technology in U.S federal government which establishes standard cryptographs intensely recommends to shift the hash function utilized in digital signature in information systems in U.S. government from SHA-1 to SHA-2 by 2010. Comments concerning the security of SHA-1 are described in "NIST Comments on Cryptanalytic Attacks on SHA-1, April 2006" (related document 3) in detail.

In response to the comments described in the related document, Public Key Infrastructure and application providers in each country execute measures for increasing the security of the information system such as shifting the encryption algorithms utilized in applications to those having higher security and making possible selection from a plurality of encryption algorithms.

### SUMMARY OF THE INVENTION

As described in related document 3, security of the encryption algorithm adopted in applications is changing day after day due to the advance of the cryptanalysis technology and improvement of the computer capability. Furthermore, improvement of the cryptograph development technology has put a new encryption algorithm having high security to practical use. Therefore, managers of applications utilizing cryptographic calculations such as "authentication," "encryption," and "digital signature" are required to always confirm the trend of the security of the encryption algorithm and adopt a recommended encryption algorithm in a cryptographic calculation of an application. In addition, for facilitating the shift to another encryption algorithm when an encryption algorithm is jeopardized and coping with a plurality of different encryption algorithms utilized by users, it is required to make possible to select an encryption algorithm adopted in a cryptographic calculation of an application from a plurality of encryption algorithms.

In an application conducting a cryptographic calculation utilizing a cryptographic device, therefore, the cryptographic device needs to be able to cope with a plurality of encryption algorithms. Since the encryption algorithm supported by a cryptographic device differs from product to product, however, it is considered that only one cryptographic device cannot support an encryption algorithm scheduled to adopt in an application in some cases. In that case, a plurality of cryptographic devices are connected to a terminal device which executes the application and a user of the application selects a cryptographic device in conformity with an encryption algorithm utilized in a cryptographic calculation.

In the related document 2, an embodiment in which a plurality of cryptographic devices are connected on a network and utilized from a plurality of terminal devices is described. However, a method for each terminal device to use the plurality of cryptographic devices properly is not described.

On the other hand, based upon technique specifications described in related document 1, it is necessary, when utilizing a plurality of cryptographic devices, for a manager to install a library of all cryptographic devices in a terminal device which executes an application and manage specifications of respective cryptographic devices such as a supported encryption algorithm and information concerning which cryptographic devices store respective keys. Furthermore, when executing an application, it is necessary for the user to select a suitable cryptographic device on the basis of the management information, load the library, and use the keys properly in order to conduct a cryptographic calculation by using an encryption algorithm selected by the user. In utilizing a plurality of cryptographic devices, therefore, there is a problem that the burden on the manager and user is heavy and it takes a time to conduct an initial process for conducting a cryptographic calculation.

The present invention has been made in view of these circumstances, and an object thereof is to provide a cryptographic device management method which make it possible to conduct a cryptographic calculation utilizing a plurality of cryptographic devices simply and swiftly, and a cryptographic device management server, and program, for executing the cryptographic device management method.

One means for achieving the object will now be described. The present invention provides a cryptographic device management method of causing a cryptographic device management server connected to a plurality of terminal devices and a plurality of cryptographic devices to receive a first cryptographic calculation request from an arbitrary terminal device via a network, transmit a second cryptographic calculation request to a cryptographic device selected on the basis of management information of the terminal devices and management information of the cryptographic devices stored in a storage unit in the cryptographic device management server, via a connection interface, receive a second cryptographic calculation result from the cryptographic device, and transmit a first cryptographic calculation result to the terminal device of the source of the first cryptographic calculation request via the network, The cryptographic device management server executes a process for updating management information of the terminal device and management information of the cryptographic device stored in the storage unit on the basis of the first cryptographic calculation request and the second cryptographic calculation result, a process for generating the second cryptographic calculation request on the basis of the first cryptographic calculation request, the management information of the terminal device, and the management information of the cryptographic device, and a process for generating the first cryptographic calculation result on the basis of the second cryptographic calculation result, the management information of the terminal device, and the management information of the cryptographic device.

According to the present invention, cryptographic calculations utilizing a plurality of cryptographic devices can be conducted simply and swiftly.

Other objects, features and advantages of the invention will become apparent from the following description of the embodiments of the invention taken in conjunction with the accompanying drawings.

### BRIEF DESCRIPTION OF THE DRAWINGS

FIG 1 is a diagram showing a configuration of a cryptographic device management system according to an embodiment of the present invention;
FIG 2 is a diagram showing a configuration of a terminal device 11;
FIG 3 is a diagram showing a configuration of a cryptographic device management server (crypto device mng server) 12;
FIG 4 is a diagram showing information of cryptographic devices 13 stored in a cryptographic device information holding unit 36 in the cryptographic device management server 12;
FIG 5 is a diagram showing information of the cryptographic devices 13 classified according to key generation mechanisms and stored in the cryptographic device information holding unit 36 in the cryptographic device management server 12;
FIG 6 is a diagram showing information of slots of the cryptographic devices 13 stored in the cryptographic device information holding unit 36 in the cryptographic device management server 12;
FIG 7 is a diagram showing information of key obj ects of the cryptographic devices 13 stored in the cryptographic device information holding unit 36 in the cryptographic device management server 12;
FIG 8 is a diagram showing information of users of terminal devices 11 stored in a user information holding unit 34 in the cryptographic device management server 12;
FIG 9 is a diagram showing access states of the users of the terminal devices 11 stored in the user information holding unit 34 in the cryptographic device management server 12;
FIG 10 is a diagram showing virtual slot session states of the users of the terminal devices 11 stored in the user information holding unit 34 in the cryptographic device management server 12;
FIG 11 is a diagram showing a hardware configuration example of each of the terminal device 11 shown in FIG 12 and the cryptographic device management server 12 shown in FIG 3;
FIG 12 is a sequence diagram showing an initialization process of the cryptographic device 13, conducted in the cryptographic device management server 12;
FIG 13 is a sequence diagram showing an initialization process of the cryptographic device management server 12, conducted in the terminal device 11;
FIG 14 is a sequence diagram showing an activating process in the cryptographic device management server 12;
FIG 15 is a sequence diagram showing an activating process in the cryptographic device management server 12;
FIG 16 is a sequence diagram showing a user authentication process of the terminal device 11, in the cryptographic device management server 12;
FIG 17 is a sequence diagram, showing an initial process of a cryptographic calculation in the terminal device 11;
FIG 18 is a sequence diagram showing a key generation process, in the terminal device 11;
FIG 19 is a sequence diagram showing a key generation process, in the cryptographic device management server 12;
FIG 20 is a sequence diagram showing a signature process, in the terminal device 11;
FIG 21 is a sequence diagram showing a signature process, in the terminal device 11; and
FIG 22 is a sequence diagram showing a signature process, in the cryptographic device management server 12.

### DESCRIPTION OF THE EMBODIMENTS

Hereafter, an embodiment of the present invention will be described in detail with reference to the drawings.

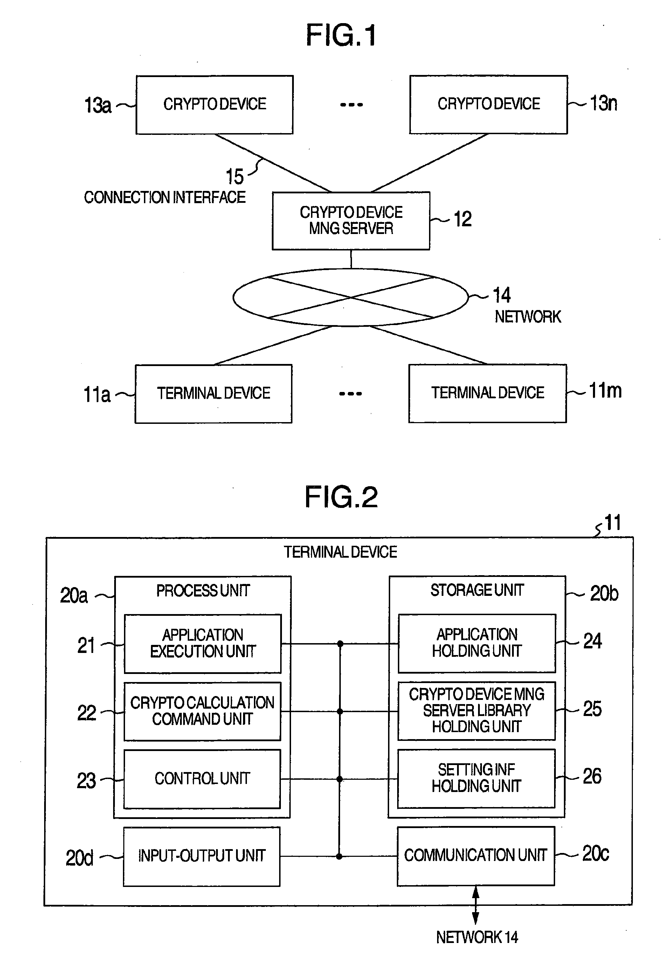

FIG 1 is a diagram showing a configuration of a cryptographic device management system according to an embodiment of the present invention.

In the present embodiment, the cryptographic device management system includes a plurality of terminal devices 11a to 11m (referred to generally as "terminal devices 11") which execute an application including a cryptographic calculation process, cryptographic devices 13a to 13n (referred to generally as "cryptographic devices 13" or "crypto devices 13") which execute a cryptographic calculation, a cryptographic (crypto) device management (mng) server 12 which issues a request (RQ) for a cryptographic calculation process called from the terminal device 11, to the cryptographic device 13, a network 14 such as Ethernet (registered trademark) which connects the terminal device 11 to the cryptographic device management server 12, and a connection interface 15 which connects the cryptographic device management server to the cryptographic device 13. By the way, the connection interface 15 indicates a PCI (Peripheral Component Interconnect), a USB (Universal Serial Bus), or the Ethernet (registered trademark). The present embodiment will be described by taking a key generation process and a signature process as an example of a cryptographic calculation process. However, its kind does not matter, and processes such as key registration, key generation, key deletion, signature and encryption are included.

Devices included in the cryptographic device system shown in FIG 1 will now be described.

First, the terminal device 11 will be described with reference to FIG 2.

The terminal device 11 includes a process unit 20a, a storage unit 20b, a communication unit 20c for conducting communication with another device via the network 14, and an input-output unit 20d for accepting a command from a user.

The process unit 20a includes an application execution unit 21 for executing applications such as an electronic application and an electronic declaration in administration procedures, electronic commerce, on-line banking and on-line shopping, a cryptographic calculation command unit 22 for issuing a request for a cryptographic calculation process to the cryptographic device management server 12, and a control unit 23 for generally controlling respective units in the terminal device.

The storage unit 20b includes an application holding unit 24 for holding an application program installed by the user via the input-output unit 20d, a cryptographic device management server library holding unit 25 for holding a library to call a cryptographic calculation process in the cryptographic device management server 12, and a setting information (inf) holding unit 26 for holding setting information (inf) to conduct connection to the cryptographic device management server 12.

As an initial process for utilizing the cryptographic device management server 12 in such a configuration, the control unit 23 stores setting information such as an IP address of the cryptographic device management server 12 and an SSL client certificate into the setting information holding unit 26, and stores the library of the cryptographic device management server 12 into the cryptographic device management server library holding unit 25.

In addition, the control unit 23 logs in a virtual slot assigned by the cryptographic device management server 12 and sets a PIN via the input-output unit 20d.

If the user operates the application execution unit 21 via the input-output unit 20d, then the control unit 23 causes the cryptographic calculation command unit 22 to issue a request for cryptographic calculation processes such as key registration, key generation, key deletion, signature (sign), and encryption included in an application to the cryptographic device management server 12 via the communication unit, and outputs an execution result of the application by utilizing a result of the cryptographic calculation obtained from the cryptographic device management server 12.

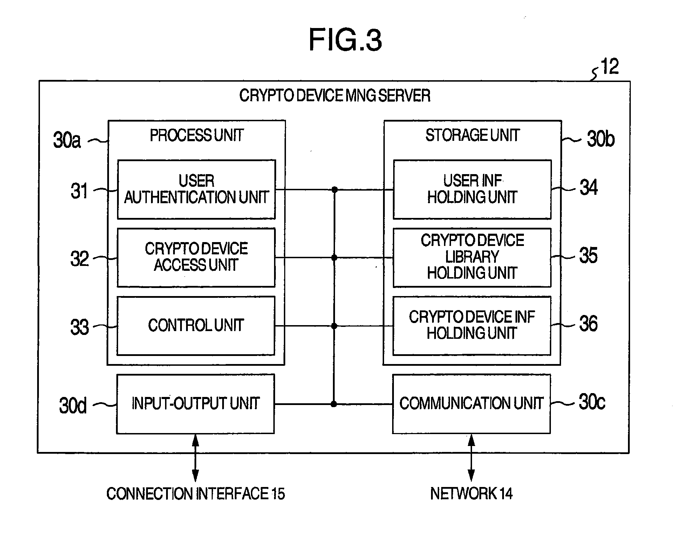

The cryptographic device management server 12 will now be described with reference to FIG 3. The cryptographic device management server 12 includes a process unit 30a, a storage unit 30b, a communication unit 30c for conducting communication with another device via the network 14, and an input-output unit 30d for conducting communication with the cryptographic device 13 via the connection interface 15 and accepting a command from the manager.

The process unit 30a includes a user authentication unit 31 for conducting user authentication and access state management of the terminal device 11, a cryptographic device access unit 32 for receiving a request for a cryptographic calculation process from the terminal device 11 and issuing a request for a cryptographic calculation process to a cryptographic device 13, and a control unit 33.

The storage unit 30b includes a user information holding unit 34 for holding registered user's setting information and information concerning the user)s access state and the session state of virtual slots, a cryptographic device library holding unit 35 for holding a library to call a cryptographic calculation process in a cryptographic device 13, and a cryptographic device information holding unit 36 for holding information concerning a mechanism, slots and key objects of the cryptographic device. The "mechanism" refers to a cryptographic scheme in the PKCS #11 such as a key generation algorithm, a cryptographic algorithm, a hash algorithm, or a signature algorithm obtained by combining the cryptographic algorithm with the hash algorithm.

By the way, the process unit 30a generates a virtual slot, a virtual token, and a virtual key object virtually on a memory 112 in the cryptographic device management server 12 which will be described later, with respect to the user of the terminal device 11, and conducts association with entities of a slot, token and a key object existing in the cryptographic device 13 by utilizing information stored in the cryptographic device information holding unit 36.

Upon receiving a user registration request from the user of the terminal device 11 in such a configuration, the user authentication unit 31 stores setting information of a virtual slot and the like assigned to the user of the terminal device 11 which is input by the manager via the input-output unit 30d, into the user information holding unit 34.

When newly registering a cryptographic device 13, the cryptographic device access unit 32 which has received an instruction from the control unit 33 acquires a cryptographic mechanism and each slot information provided in the cryptographic device 13 via the input-output unit 30d by using the library of the cryptographic devices 13 stored in the cryptographic device library holding unit 35, and stores the cryptographic mechanism and each slot information into the cryptographic device information holding unit 36. It is possible to increase the mechanisms provided for a cryptographic calculation process in the terminal device 11, by installing a new cryptographic device 13 additionally. By the way, the manager generates a list about a cryptographic mechanism in which safety of a cryptographic algorithm and a key length poses a problem or a cryptographic mechanism judged by the manager of the cryptographic device management server 12 to be jeopardized, and stores the list in the cryptographic device management server 12. In a process for registering a cryptographic mechanism which is provided in the cryptographic device and which is scheduled to be registered in the cryptographic device information holding unit 36, the cryptographic device management server 12 refers to the list and omits the registration of the cryptographic mechanism existing in the list.

When indirectly utilizing an existing cryptographic device 13 which has been connected directly to a terminal device 11 and utilized, via the cryptographic device management server 12, registration of the existing cryptographic device 13 is conducted. In that case, besides the process conducted when newly registering a cryptographic device 13, the cryptographic device access unit 32 conducts slot session establishment and token login of the existing cryptographic device 13 by utilizing the library of the existing cryptographic device 13, acquires session information and stored information of a key object, and stores the acquired information into the cryptographic device holding unit 36. In addition, the manager assigns a virtual slot to a user of the terminal device connected directly to the cryptographic device 13, via the input-output unit 30d, and the user authentication unit 31 stores setting information such as the virtual slot assigned to the user of the terminal device 11 into the user information holding unit 34. In addition, the manager assigns a virtual key object to the key object acquired from the existing cryptographic device 13, and the cryptographic device access unit 32 stores information of association of the virtual key object with the key object acquired from the existing cryptographic device 13 into the cryptographic device information holding unit 36.

Furthermore, when the manager has activated the cryptographic device management server 12, the control unit 33 instructs the cryptographic device access unit 32 to acquire cryptographic device information. Upon receiving the instruction, the cryptographic device access unit 32 conducts slot session establishment and token login of each cryptographic device 13 by utilizing the library of each cryptographic device 13 stored in the cryptographic device library holding unit 35, acquires session information and stored information of a key object, and stores the acquired information into the cryptographic device holding unit 36.

Furthermore, upon receiving a connection request from the terminal device 11 via the communication unit 30c, the control unit 33 gives a notice of the connection request to the user authentication unit 31. Upon receiving the notice, the user authentication unit 31 conducts user authentication on the basis of user information stored in the user information holding unit 34. If the user authentication is successful, the user authentication unit 31 stores an access state in the user information holding unit 34, and establishes a secure session between the terminal device 11 and the cryptographic device management server 12 in a cryptographic calculation request at the next time or later. By the way, the "secure session" means a session utilizing communication technology such as the SSL/TLS.

Furthermore, if the control unit 33 receives a disconnection request from the terminal device 11 via the communication unit 30cand instructs the user authentication unit 31 to disconnect, or if the user of a terminal device 11 in the connection state has not established a session to a virtual slot for at least a predetermined time, then the user authentication unit 31 disconnects the session to the pertinent terminal device 11 and deletes the access state of the pertinent terminal device 11 stored in the user information holding unit 34.

Furthermore, upon receiving a cryptographic calculation request from a terminal device 11 via the communication unit 30c, the control unit 33 gives a notice of cryptographic calculation request to the user authentication unit 31. Upon receiving the notice, the user authentication unit 31 confirms that the user is in the login state by referring to the access state of the user stored in the user information holding unit 34, and transmits a user ID and the cryptographic calculation request to the cryptographic device access unit 32. Upon receiving the user ID and the cryptographic calculation request, the cryptographic device access unit 32 establishes a session to a virtual slot on the memory 112 in the cryptographic device management server 12 selected by the user, and accepts a request for a cryptographic calculation such as key registration, key generation, key deletion, signature or encryption.

In the key generation in the cryptographic calculation, the cryptographic device access unit 32 accesses a cryptographic device 13 and generates a key object of an entity, generates a virtual key obj ect corresponding to the key obj ect of the entity on the cryptographic device management server 12, and gives a notice of information of the virtual key object to the terminal device 11. In addition, the cryptographic device access unit 32 stores information of the generated virtual key object in the user information holding unit 34.

In the signature or encryption in the cryptographic calculation, the cryptographic device access unit 32 converts the generated virtual key object to the key object of the entity on the basis of user information stored in the user information holding unit 34. In addition, the cryptographic device access unit 32 accesses a cryptographic device 13, conducts signature or encryption by utilizing the key obj ect of the entity, and gives a notice of a result of the process to the terminal device 11 via the communication unit 30c.

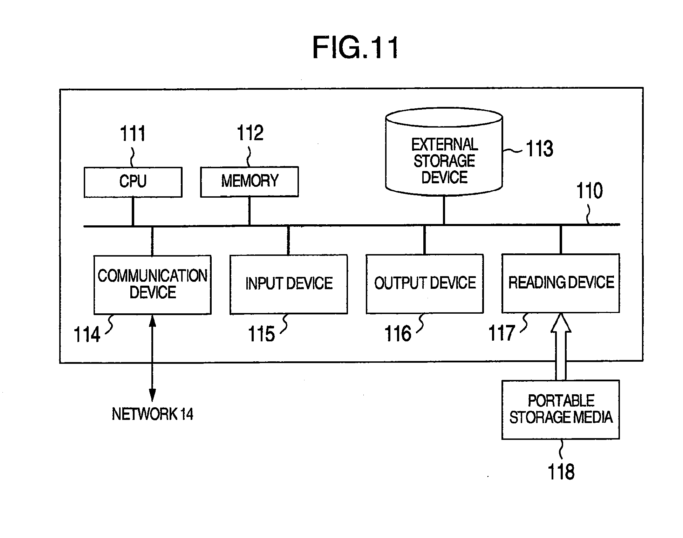

By the way, the terminal device 11 shown in FIG 2 and the cryptographic device management server 12 shown in FIG 3 can be constructed on an ordinary computer including a CPU 111, a memory 112, an external storage device 113 such as a hard disk, a communication device 114 for conducting communication with another device via the network 14, an input device 115 such as a keyboard or a mouse, an output device 116 such as a monitor or a printer, a reading device 117 for reading information from portable storage media 118 such as CD-ROM, and an internal communication line 110 for conducting data transmission and reception between these devices as shown in FIG 11.

And the above-described process units can be implemented by the CPU 111 executing a predetermined program loaded from the external storage device 113 onto the memory 112. In other words, the communication units 20c and 30c are implemented by the CPU 111 utilizing the communication device 114. The input-output units 20d and 30d are implemented by the CPU 111 utilizing the input device 115, the output device 116, and the reading device 117. And the storage units 20b and 30b are implemented by the CPU 111 utilizing the memory 112 and the external storage device 113. Furthermore, the process units 20a and 30a are implemented as processes of the CPU 111.

The predetermined program may be stored in the external storage device 113 beforehand. Or the predetermined program may be stored in the storage media 118 which can be utilized by the computer and may be read out via the reading device 117 as occasion demands. Or the predetermined program may be downloaded from the network 14 serving as a communication medium which can be utilized by the computer or another device connected to the communication device 114 which utilizes a carrier wave propagating on the network 14 as occasion demands and may be introduced into the external storage device 113.

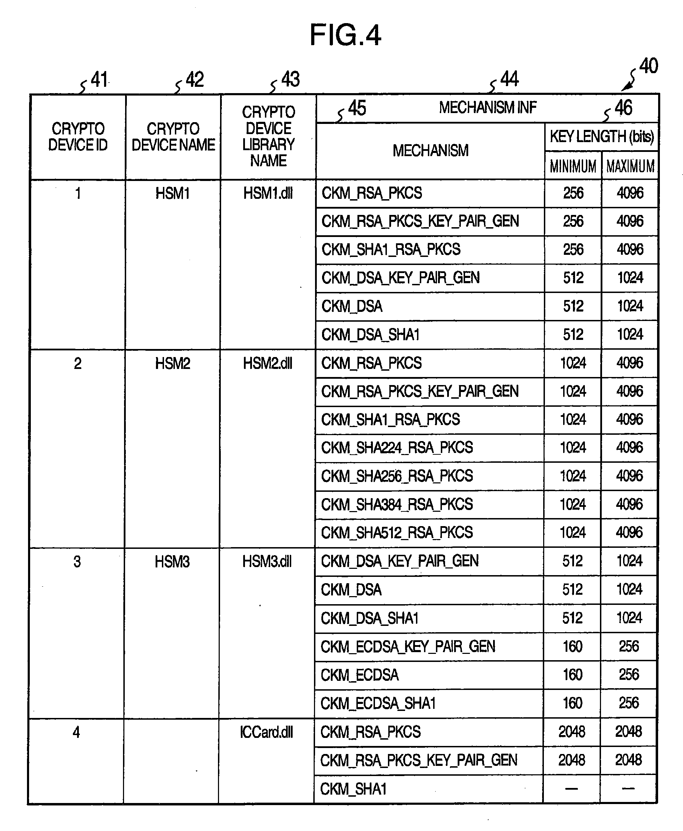

A cryptographic device setting file 40 stored in the cryptographic device information holding unit 36 in the cryptographic device management server 12 will now be described with reference to FIG 4. The cryptographic device setting file 40 is edited via the input-output unit 30d in an initialization process of the cryptographic devices 13. With respect to each cryptographic device 13, a cryptographic device ID assigned by the manager is stated in a column of a cryptographic device ID 41, a cryptographic device name is stated in a column of a cryptographic device name 42, and a path name of cryptographic device library is stated in a column of a cryptographic library name 43. Furthermore, a mechanism name and a key length concerning cryptograph supported by each cryptographic device 13 are stated in a column of mechanism information 44. The mechanism name is stated in a column of a mechanism name 45. The shortest key length and the longest key length are stated in a column of a key length 46.

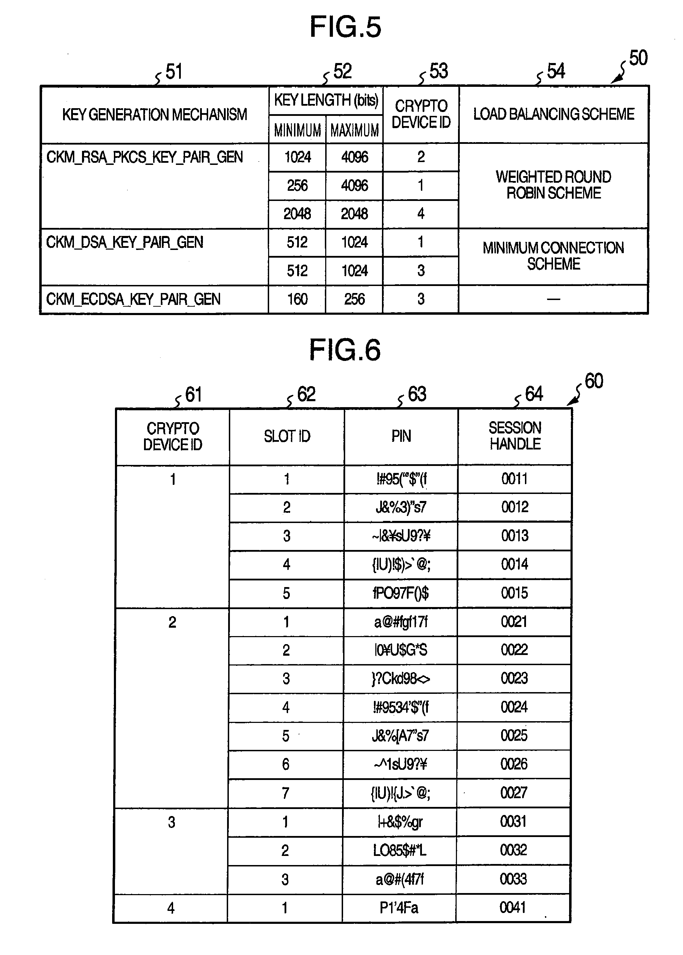

A list 50 of cryptographic devices by key generation mechanism stored in the cryptographic device information holding unit 36 in the cryptographic device management server 12 will now be described with reference to FIG 5. The list 50 of cryptographic devices by key generation mechanism is obtained by extracting a key generation mechanism (such as, for example, CKM_RSA_PKCS_KEY_PAIR_GEN) from the column of the mechanism 45 in the cryptographic device setting file 40 and forming a list in the order of key generation mechanism. A key generation mechanism existing in the mechanism 45 in the cryptographic device setting file 40 shown in FIG 4 is stated in a column of a key generation mechanism 51. The shortest key length and the longest key length in the key generation mechanism 51 extracted from the column of the key length 46 in the cryptographic device setting file 40 shown in FIG 4 are stated in a column of a key length 52. Furthermore, cryptographic device IDs of cryptographic devices 13 which support the mechanism stated in the column of the key generation mechanism 51 are stated in a column of a cryptographic device ID 53 in a descending order of distribution priority with due regard to performances of cryptographic devices. If a plurality of cryptographic device IDs corresponding to the column of the key generation mechanism 51 exist in the column of the cryptographic device ID 53, then a scheme for distributing the plurality of cryptographic devices 13 is stated in a column of a load balancing scheme 54. For example, if the cryptographic devices differ in performance, it is possible to conduct weighting in the order in the column of the cryptographic device ID 53 and conduct distribution in accordance with the round robin scheme. For example, if the cryptographic devices 13 are the same in performance, distribution can be conducted in accordance with the minimum connection scheme in which distribution is conducted preferentially from a cryptographic device 13 having the fewest connection number in order to make the number of connections of the cryptographic devices 13 uniform.

A cryptographic device slot management table 60 stored in the cryptographic device information holding unit 36 in the cryptographic device management server 12 will now be described with reference to FIG 6. The cryptographic device slot management table 60 is edited in the activating process of the cryptographic device management server 12. With respect to each cryptographic device 13, a cryptographic device ID is stated in a column of a cryptographic device ID 61. IDs of slots existing in each cryptographic device 13 are stated in a column of a slot ID 62. PINs of respective slots are stated in a column of a PIN 63. Values of session handles of respective slots acquired in the process at the time of activating the cryptographic device management server 12 are stated in a column of a session handle 64. By the way, the PIN can be stored in the cryptographic device information holding unit 36 in an encrypted state. Furthermore, as for the session handle, a value generated when establishing a session to the cryptographic device 13 is set.

A key obj ect management table 70 stored in the cryptographic device information holding unit 36 in the cryptographic device management server 12 will now be described with reference to FIG 7. The key object management table 70 is edited in a key generation process conducted in the terminal device 11 and the cryptographic device management server 12 and the activating process conducted in the cryptographic device management server 12. With respect to each virtual key object, a value of a virtual key handle is stated in a column of a virtual key handle 71. A cryptographic device ID in which an actual key object exists is stated in a column of a cryptographic device ID 72. An ID of a slot in which an actual key object exists is stated in a column of an actual slot ID 73. A value of an actual key handle in the cryptographic device 13 is stated in a column of an actual key handle 74. Attribute information such as a label name of the actual key object, a key classification, and a public key is stated in attribute information 75. By the way, the actual key handle 74 is generated and set when a key object is searched for in the cryptographic device 13.

A user setting file 80 stored in the user information holding unit 34 in the cryptographic device management server 12 will now be described with reference to FIG 8. The user setting file 80 is edited when registering the user of the terminal device 11. With respect to each user, a registered user ID is stated in a column of a user ID 81. A virtual slot ID assigned to each user is stated in a column of a virtual slot ID 82. A PIN of each virtual slot is stated in a column of a PIN 83. A value of a virtual key handle existing in each virtual slot is stated in a column of a virtual key handle 84. By the way, the PIN is stored in the user information holding unit 34 in an encrypted state.

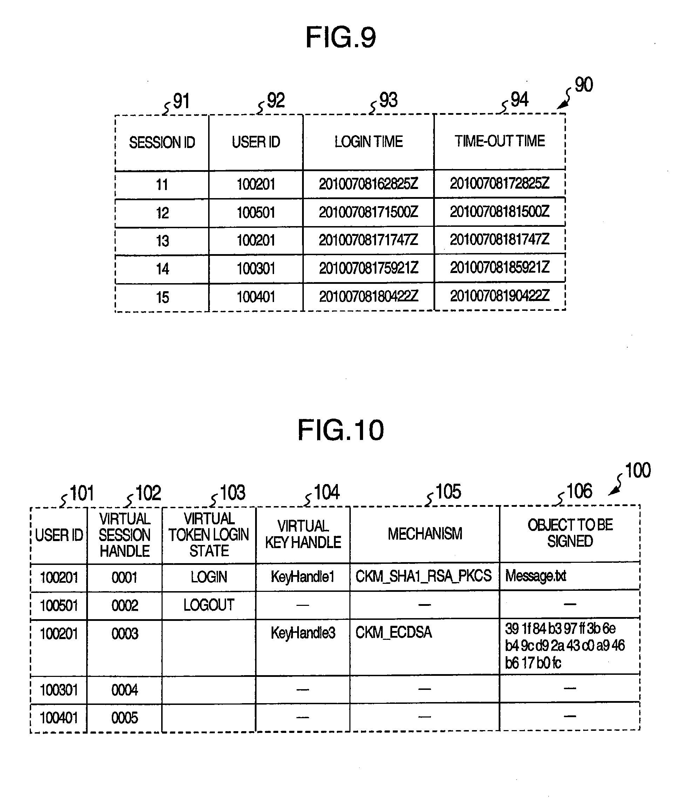

An access state management table 90 stored in the user information holding unit 34 in the cryptographic device management server 12 will now be described with reference to FIG 9. The access state management table 90 is edited when the terminal device 11 is connected to and disconnected from the cryptographic device management server 12. A session ID between a terminal device 11 and the cryptographic device management server 12 is stated in a column of a session ID 91. A user ID of a terminal device assigned each session ID is stated in a column of a user ID 92. Time when each user has logged in is stated in a column of a login time 93. Time when the login state of each user times out is stated in a column of time-out time 94. The time-out time 94 is calculated by adding a time-out time interval which is set by the manager separately to the time when the user has logged in. By the way, if the time-out time 94 is reached, the user authentication unit 31 changes the session state of the pertinent user ID to logout, and deletes pertinent session information from the access state management table 90. If the time-out time 94 is reached, then the user authentication unit 31 confirms a session state to a virtual slot assigned to the pertinent user, in a cryptographic device session state management table 100 shown in FIG 10, and if a virtual session handle of the pertinent user exists, the user authentication unit 31 updates the time-out time 94. However, it is also possible by setting for the user authentication unit 31 not to update the time-out time 94 when the time-out time 94 is reached, in preparation for a case where the terminal device 11 conducts disconnection of a session to a virtual slot or conducts access disconnection without issuing an access disconnection request to the cryptographic device management server 12.

A cryptographic device session state management table 100 stored in the user information holding unit 34 in the cryptographic device management server 12 will now be described with reference to FIG 10. The cryptographic device session state management table 100 is updated when a terminal device 11 has established a session to a virtual slot existing in the cryptographic device management server 12. An ID of a user who has established a session of a virtual slot is stated in a column of a user ID 101. A value of each virtual session handle is stated in a column of a virtual session handle 102. A login state (login or logout) of each virtual token is stated in a column of a virtual token login state 103. A value of a virtual key handle selected by the user of the terminal device 11 is stated in a column of a virtual key handle 104. A mechanism name selected by the user of the terminal device 11 is stated in a column of a mechanism 105. By the way, if the cryptographic calculation is signature, a value of signature object data specified by the user of the terminal device is stated in a column of an object to be signed 106.

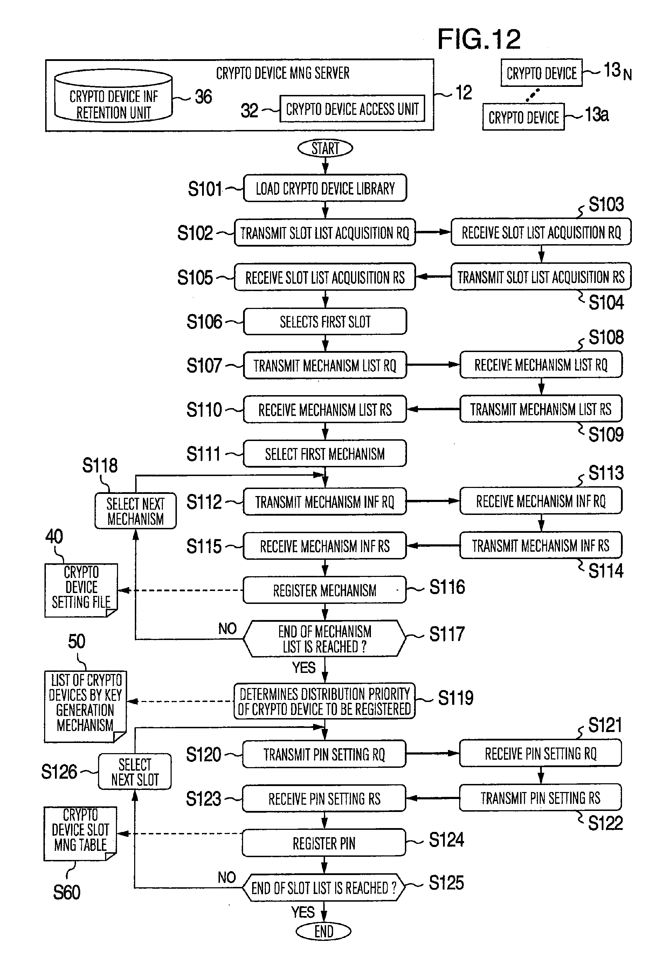

An exemplary process between a terminal device and the cryptographic device management server 12 and an exemplary process between the cryptographic device management server 12 and a cryptographic device 13 will now be described in detail with reference to FIGS. 12 to 22.

First, an initialization process of a newly connected cryptographic device 13 in the cryptographic device management server 12 will now be described with reference to FIG 12.

The cryptographic device access unit 32 in the cryptographic device management server 12 acquires a library of a newly connected cryptographic device 13 from the cryptographic device library holding unit 35 and loads it onto the memory 112 (S101). If the cryptographic device access unit 32 generates each request to the cryptographic device 13 which will be described later, by utilizing a function in the loaded library, then the control unit 33 gives an instruction to the input-output unit 30d and transmits each request to the cryptographic device 13 via the connection interface 15.

First, the cryptographic device access unit 32 generates a slot list acquisition request (RQ) and transmits the slot list acquisition request to the cryptographic device 13 (S102).

Upon receiving the slot list acquisition request (S103), the cryptographic device 13 acquires a slot list provided in the cryptographic device 13 and gives a response (RS) to the cryptographic device access unit 32 (S104).

Upon receiving the slot list (S105), the cryptographic device access unit 32 selects a first slot (S106), generates a mechanism list acquisition request, and transmits the mechanism list acquisition request to the cryptographic device 13 (S107).

Upon receiving the mechanism list acquisition request (S108), the cryptographic device 13 transmits a mechanism list supported by the cryptographic device 13 as a response (S109).

Upon receiving the mechanism list (S 110), the cryptographic device access unit 32 selects a first mechanism in the mechanism list (S111). The cryptographic device access unit 32 generates an acquisition request of information concerning the first mechanism and transmits the mechanism information request to the cryptographic device 13 (S 112).

Upon receiving the mechanism information request (S 113), the cryptographic device 13 acquires detailed information such as a key length supported by the pertinent mechanism and transmits the mechanism information to the cryptographic device access unit 32 as a response (S 114).

Upon receiving information concerning the mechanism (S115), the cryptographic device access unit 32 enters and registers a cryptographic device ID assigned by the manager of the cryptographic device management server 12, a cryptographic device name, a cryptographic device library name and mechanism information into the cryptographic device setting file 40 stored in the cryptographic device information holding unit 36 (S116). By the way, if security of a cryptographic algorithm and a key length contained in the mechanism information acquired at the S115 poses a problem or is jeopardized, a part or all of the mechanism information registered at the S 116 is omitted on the basis of a decision of the manager of the cryptographic device management server 12. Unless an end of the mechanism list acquired at the S110 is reached (No at S 117), the cryptographic device access unit 32 selects the next mechanism from the mechanism list (S118) and proceeds to the S 112. If the end of the mechanism list acquired at the S110 is reached (Yes at the S 117), then the cryptographic device access unit 32 additionally enters information of the cryptographic device 13 connected newly into the list 50 of cryptographic devices by key generation mechanisms, and if a plurality of cryptographic devices support the same key generation mechanism, the cryptographic device access unit 32 determines distribution priority and a load balancing scheme (S119). By the way, unless a plurality cryptographic devices 13 support the same key generation mechanism, "first" is stated in distribution priority and "-" is stated in the load balancing scheme 54 in the list 50 of cryptographic devices by key generation mechanisms.

Then, the cryptographic device access unit 32 transmits a PIN setting request of a slot which contains new PIN information to the cryptographic device 13 (S120).

Upon receiving the PIN setting request (S121), the cryptographic device 13 changes a PIN which is set in the initialization to the PIN contained in the PIN setting request and transmits a result of PIN setting as a response (S122).

The cryptographic device access unit 32 receives the response of the PIN setting result (S123). If the result is successful, the cryptographic device access unit 32 enters the cryptographic device ID, a slot ID selected by the cryptographic device access unit 32, and the newly set PIN into the cryptographic device slot management table 60 stored in the cryptographic device information holding unit 36 (S124). Unless an end of the slot list acquired at the S105 is reached (No at S125), the cryptographic device access unit 32 selects the next slot from the slot list (S126) and proceeds to S120. If the end of the slot list is reached (Yes at the S125), the cryptographic device access unit 32 finishes the process.

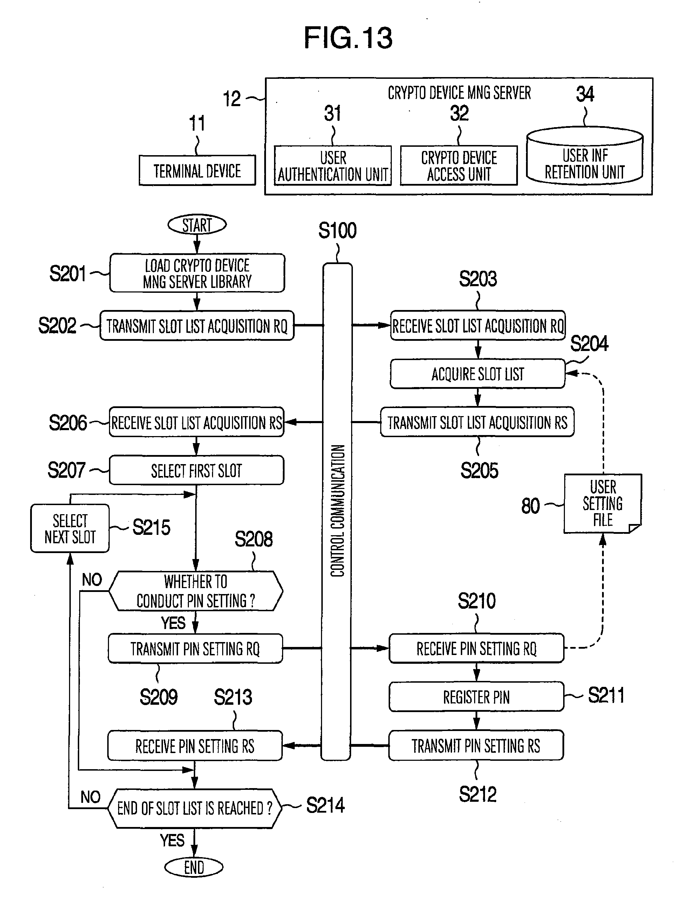

An initialization process for utilizing the cryptographic device management server 12 in a terminal device 11 will now be described with reference to FIG 13.

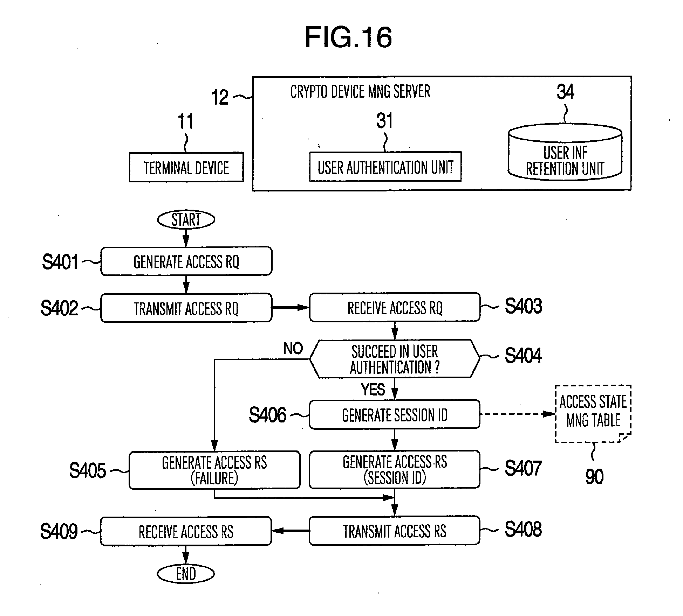

The terminal device 11 acquires the library of the cryptographic device management server 12 from the cryptographic device management server library holding unit 25 via the input-output unit 20d and loads it onto the memory 112 (S201). The terminal device 11 generates each request for the cryptographic device management server 12 which will be described later, by utilizing a function in a loaded library. Furthermore, the terminal device 11 gives a notice of each request to the communication unit 20d and transmits each request to the cryptographic device management server 12 via the network 14. By the way, the user authentication unit 31 in the cryptographic device management server 12 confirms that the user of the terminal device 11 is in the login state by referring to the access state management table 90, acquires the user ID by using a session ID contained in the communication as a retrieval key, and transmits the request from the terminal device 11 and the user ID to the cryptographic device access unit 32 (S100). The user authentication will be described with reference to FIG 16. First, the terminal device 11 generates a slot list acquisition request and transmits it to the cryptographic device management server 12 (S202).

Upon receiving the slot list acquisition request (S203), the cryptographic device access unit 32 in the cryptographic device management server 12 retrieves a virtual slot ID from the user setting file 80 provided in the user information holding unit 34 by using the user ID transmitted from the user authentication unit 31 as a retrieval key, acquires a slot list formed of a plurality of slot IDs (S204), and gives a response to the terminal device 11 (S205).

Upon receiving the slot list (S206), the terminal device 11 selects a first slot (S207). If PIN setting of the selected slot is to be conducted (Yes at S208), the terminal device 11 transmits a PIN setting request of a slot containing new PIN information to the cryptographic device management server 12 (S209).

Upon receiving the PIN setting request (S210), the cryptographic device access unit 32 enters a PIN contained in the PIN setting request into a row of the pertinent user ID in the user setting file 80 (S211) and transmits a result of the PIN setting to the terminal device 11 as a response (S212).

The terminal device 11 receives the PIN setting result (S213). Unless an end of the slot list acquired at the S206 is reached (No at S214), the terminal device 11 selects the next slot from the slot list (S215) and proceeds to S208. If the end of the slot list is reached (Yes at the S214), the terminal device 11 finishes the process.

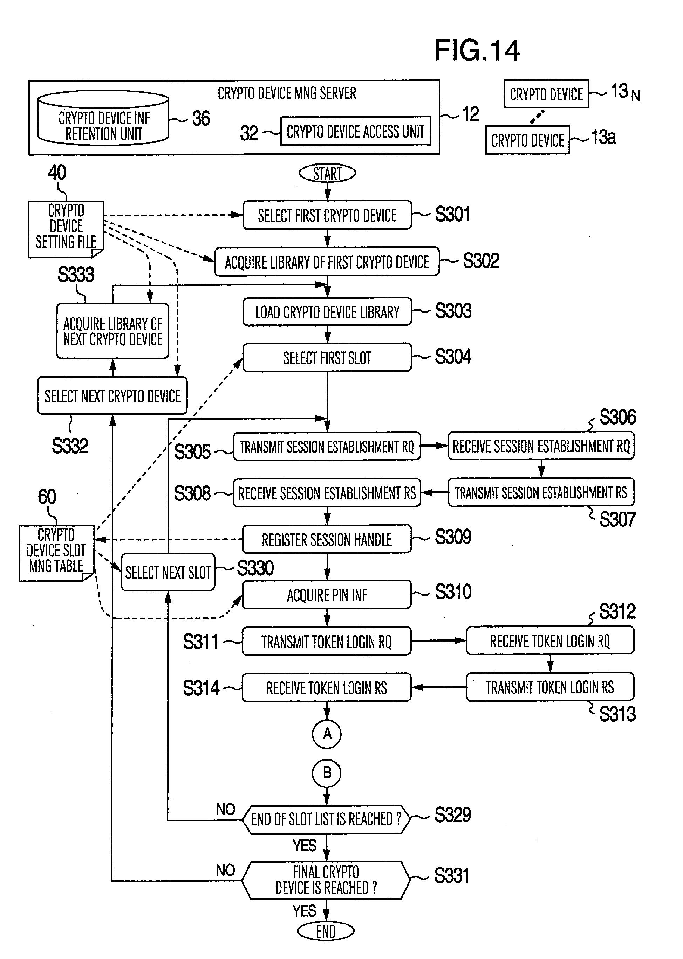

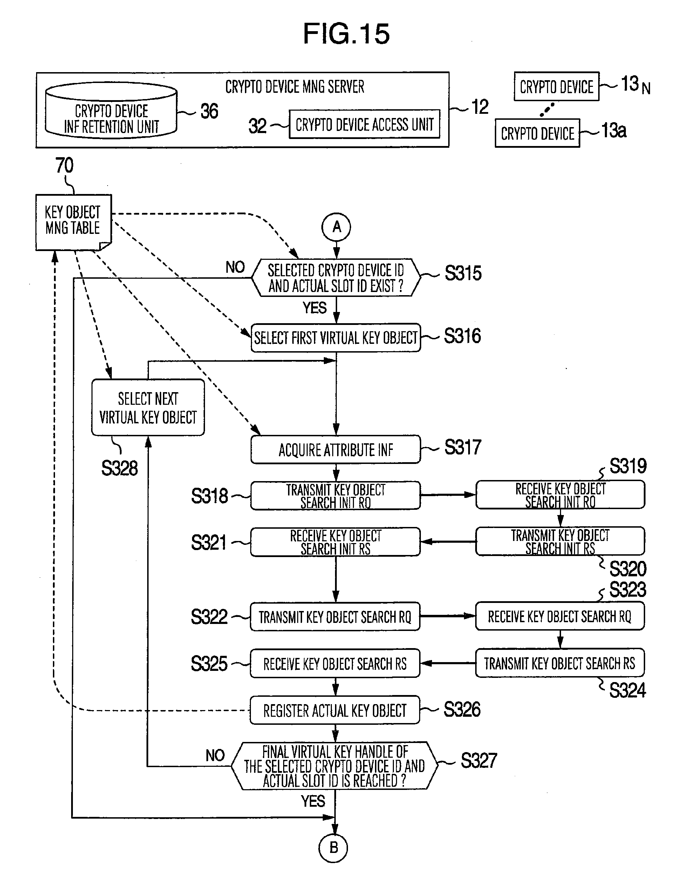

An activating process in the cryptographic device management server 12 will now be described with reference to FIGS. 14 and 15. S301 to S314 and S329 to S331 are shown in FIG 14, and S315 to S328 are shown in FIG 15.

The cryptographic device access unit 32 selects a first cryptographic device in the cryptographic device setting file 40 stored in the cryptographic device information holding unit 36 (S301) and acquires a library of the first cryptographic device from the cryptographic device library holding unit 35 (S302). The cryptographic device access unit 32 loads the library on the memory 112 in the cryptographic device management server 12 (S303). The cryptographic device access unit 32 retrieves a slot ID by using a cryptographic device ID of a cryptographic device selected from the cryptographic device slot management table 60 stored in the cryptographic device information holding unit 36 as a retrieval key and selects a first slot (S304). The cryptographic device access unit 32 transmits a session establishment request for the first slot to the cryptographic device 13 (S305).

Upon receiving the session establishment request (S306), the cryptographic device 13 conducts session establishment of the specified slot and transmits a result of the session establishment as a response (S307).

Upon receiving the session establishment response (S308), the cryptographic device access unit 32 enters a session handle contained in the session establishment response into a row of the pertinent cryptographic device ID and slot ID in the cryptographic device slot management table 60 (S309). In addition, the cryptographic device access unit 32 acquires a PIN from the cryptographic device slot management table 60 by using the selected cryptographic device ID and slot ID as a retrieval key (S310). The cryptographic device access unit 32 transmits a token login request containing the session handle acquired at the S308 and the PIN acquired at the S310 (S311).

Upon receiving the token login request (S312), the cryptographic device 310 conducts PIN authentication and transmits a token login result (S313).

The cryptographic device access unit 32 receives the token login response (S314). If the result is successful, the cryptographic device access unit 32 proceeds to S315 shown in FIG 15. The cryptographic device access unit 32 retrieves a virtual key handle by using a cryptographic device ID and an actual slot ID selected from the key object management table 70 stored in the cryptographic device information holding unit 36 as a retrieval key. Unless the virtual key handle exists (No at the S315), the cryptographic device access unit 32 proceeds to the S329 shown in FIG 14. If the virtual key handle exists (Yes at the S315), then the cryptographic device access unit 32 selects a first virtual key object of the pertinent cryptographic device ID and actual slot ID (S316), and acquires attribute information from the key object management table 70 by using the selected virtual key handle as a retrieval key (S317). The cryptographic device access unit 32 transmits a key object search initialization (init) request to search containing the session handle acquired at the S308 and the attribute information acquired at the S317 to the cryptographic device 13 (S318)

Upon receiving the key object search initialization request (S319), the cryptographic device 13 stores the attribute information contained in the request and transmits a key object search initialization (init) response (S320). The cryptographic device access unit 32 receives the key object search initialization response (S321). If the result is successful, then the cryptographic device access unit 32 transmits a key object search request containing the session handle acquired at the S308 to the cryptographic device 13 (S322). Upon receiving the key object search request (S323), the cryptographic device access unit 32 searches a key object of a token logged in at the S312 by using the attribute information acquired at the S319 as a search key. The cryptographic device 13 transmits a key handle of the searched key object to the cryptographic device access unit 32 (S324).

Upon receiving a key object search response (S325), the cryptographic device access unit 32 enters the actual key handle contained in the key object search response into a row of the pertinent virtual key handle in the key object management table 70 (S326). Unless a final virtual key handle of the selected crystal device ID and actual slot ID is reached in the key object management table 70 (No at S327), the cryptographic device access unit 32 selects the next virtual key handle (S328) and proceeds to the S317. If the final virtual key handle is reached (Yes at the S327), the cryptographic device access unit 32 proceeds to the S329 shown in FIG 14. Unless an end of a slot list of the selected cryptographic device ID is reached in the cryptographic device setting file 40 (No at S329), the cryptographic device access unit 32 selects the next slot (S330) and proceeds to the S305. If the end of the slot list of the selected cryptographic device ID is reached (Yes at the S329), the cryptographic device access unit 32 proceeds to S331. Unless a row of a final cryptographic device ID in the cryptographic device setting file 40 is reached (No at the S331), the cryptographic device access unit 32 selects the next cryptographic device ID (S332), acquires a library of the selected cryptographic device from the cryptographic device library holding unit 35 (S333) and proceeds to S303. If the row of the final cryptographic device ID is reached (Yes at the S331), the cryptographic device access unit 32 finishes the process.

A user authentication process of the terminal device 11 in the cryptographic device management server 12 will now be described with reference to FIG 16. After the user authentication has succeeded, the terminal device 11 can issue a request for a cryptographic calculation to the cryptographic device management server 12 by utilizing the acquired session ID.

The terminal device generates an access request by utilizing an IP address or an SSL client certificate of the cryptographic device management server 12 stored in the setting information holding unit 26 (S401) and transmits the access request to the cryptographic device management server 12 (S402).

Upon receiving the access request (S403), the user authentication unit 31 conducts client authentication of the SSL. Upon failing in the authentication (No at S404), the user authentication unit 31 generates an access response which represents the authentication failure (S405) and proceeds to S408. Upon succeeding in the authentication (Yes at the S404), the user authentication unit establishes a session between the terminal device 11 and the cryptographic device management server 12, generates a session ID, and registers the session ID, user ID, login time and time-out time into the access state management table 90 stored in the user information holding unit 34 (S106). In addition, the user authentication unit 31 generates an access response containing the session ID (S407) and transmits the access response to the terminal device 11 (S408).

Upon receiving the access response (S409), the terminal device stores the session ID contained in the response and utilizes the session ID in communication for a cryptographic calculation request at the next time or later.

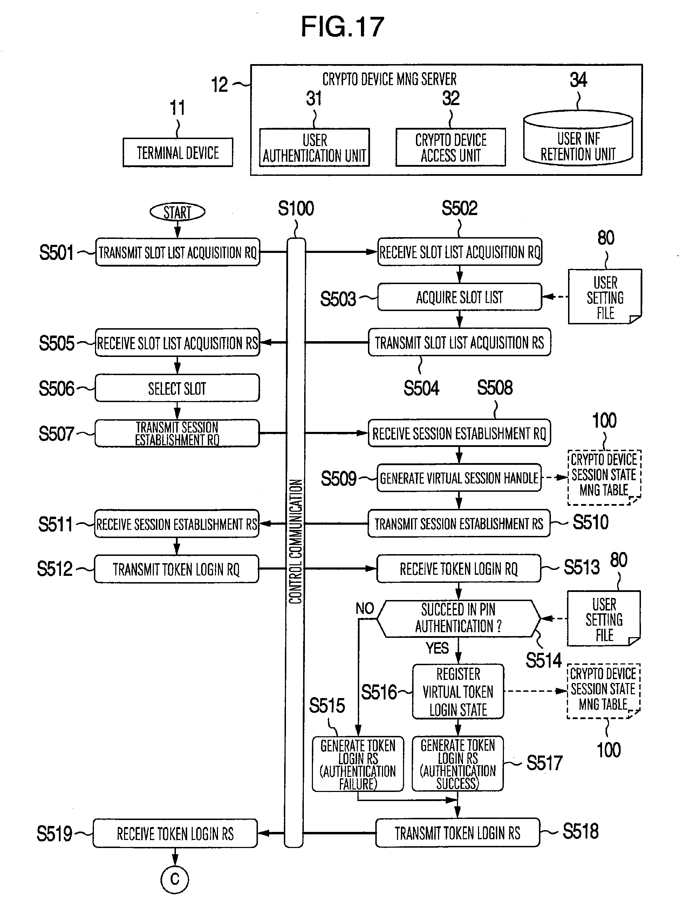

An initial process executed by the terminal device 11 before issuing a request for a cryptographic calculation such as key generation, encryption or signature will now be described with reference to FIG 17.

First, the terminal device 11 generates a slot list acquisition request and transmits it to the cryptographic device management server 12 (S501).

Upon receiving the slot list acquisition request (S502), the cryptographic device access unit 32 in the cryptographic device management server 12 retrieves a virtual slot ID from the user setting file 80 provided in the user information holding unit 34 by using a user ID transmitted from the user authentication unit 31 as a retrieval key, acquires a slot list formed of a plurality of slot IDs (S503), and gives a response to the terminal device 11 (S504).

Upon receiving the slot list (S505), the terminal device 11 selects a slot ID of a slot to be utilized in the cryptographic calculation (S506), and transmits a session establishment request for the selected slot (S507).

Upon receiving the session establishment request (S508), the cryptographic access unit 32 generates a virtual session handle and enters the virtual session handle into a row of the pertinent user ID in the cryptographic device session state management table 100 stored in the user information holding unit 34 (S509). In addition, the cryptographic device access unit 32 transmits a result of the session establishment containing a virtual session handle as a response (S510).

Upon receiving the session establishment response (S511), the terminal device 11 transmits a token login request containing a session handle acquired at the 511 and a PIN of a token which is assigned to the slot selected at the S506, to the cryptographic device access unit 32 (S512).

Upon receiving the token login request (S513), the cryptographic device access unit 32 refers to a PIN of the pertinent user ID in the user setting file 80 stored in the user information holding unit 34 and authenticates the PIN with the PIN received at the S513. Upon failing in the authentication (No at S514), the cryptographic device access unit 32 generates a token login response which represents an authentication failure (S515). Upon succeeding in the authentication (Yes at the S514), the cryptographic device access unit 32 enters "login" into the virtual token login state corresponding to the pertinent user ID and virtual session handle in the cryptographic device session state management table 100 (S516). In addition, the cryptographic device access unit 32 generates a token login response which represents an authentication success (S517) and transmits the result of the token login as a response (S518).

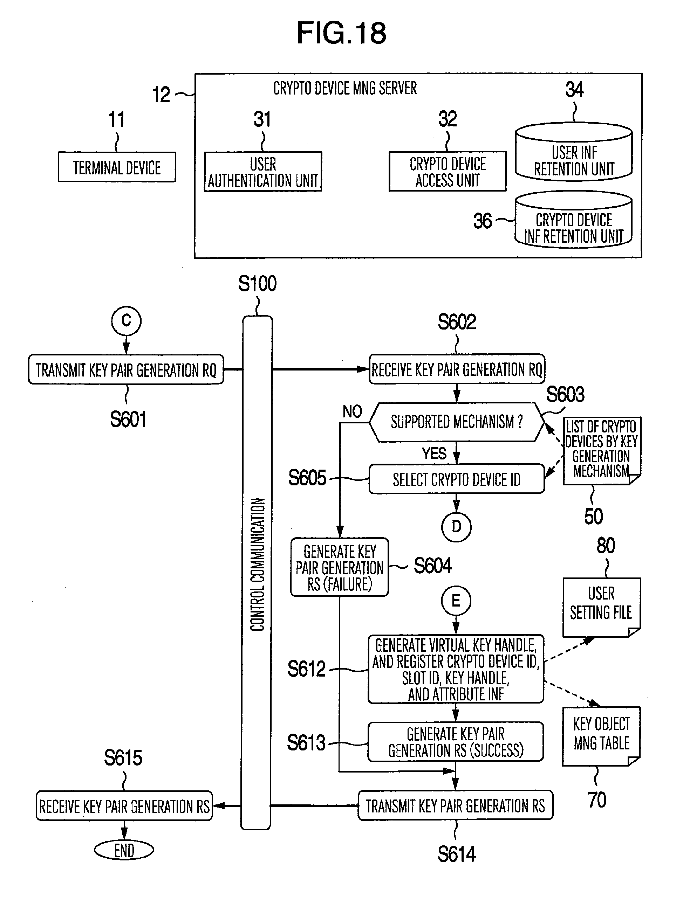

Upon receiving the token login response (S519), the terminal device 11 issues a request for a photographic calculation shown in, for example, FIGS. 18 to 22. By the way, the terminal device 11 can issue a request for a cryptographic calculation such as key registration, key deletion, or encryption by using a similar method.

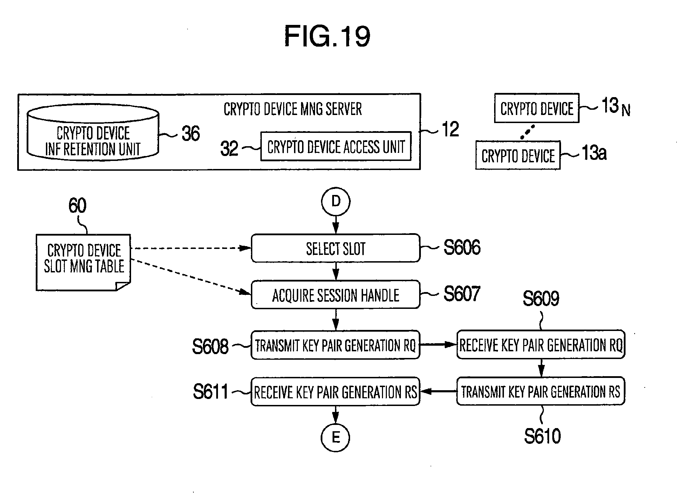

A key generation process in the terminal device 11 and the cryptographic device management server 12 will now be described with reference to FIGS. 18 and 19. S601 to S605 and S612 to S615 are shown in FIG 18, and S606 to S611 are shown in FIG 19.

After the initial process shown in FIG 17 is completed, the terminal device 11 transmits a key pair generation request containing a key generation mechanism and a key length to the cryptographic device management server 12 (S601).

Upon receiving the key pair generation request (S602), the cryptographic device access unit 32 refers to the list 50 of cryptographic devices by key generation mechanism stored in the cryptographic device information holding unit 36, and ascertains whether a cryptographic device 13 which supports the key generation mechanism and the key length acquired at the S602 exists. Unless such a cryptographic device 13 exists (No at S603), the cryptographic device access unit 32 generates a key pair generation response to the effect that the key pair generation result is a failure (S604). If such a cryptographic device 13 exists (Yes at the S603), the cryptographic device access unit 32 acquires the pertinent cryptographic device ID from the list 50 of cryptographic devices by key generation mechanism. Furthermore, if a plurality of pertinent cryptographic device IDs exist, then the cryptographic device access unit 32 selects one of the cryptographic device IDs on the basis of the stated load balancing scheme (S605) and proceeds to S606 shown in FIG 19. The cryptographic device access unit 32 conducts retrieval in the cryptographic device slot management table 60 stored in the cryptographic device information holding unit 36 on the basis of the cryptographic device ID selected at the S605, selects an arbitrary slot ID from among a plurality of pertinent slot IDs (S606), and in addition the cryptographic device access unit 32 acquires a session handle corresponding to the slot ID selected at the S606 (S607). The cryptographic device access unit 32 transmits a key pair generation request (cryptographic calculation request) containing the slot ID acquired at the S606, the session handle acquired at the S607, and mechanism information specified by the terminal device 11 to the cryptographic device 13 (S608).

Upon receiving the key pair generation request (S609), the cryptographic device 13 generates a key object (attribute information) on the basis of the mechanism information contained in the key pair generation request. In addition, the cryptographic device 13 transmits a key pair generation response containing a key handle which is information specifying the generated key pair object (S610). Upon receiving the key pair generation response (cryptographic calculation result) (S611), the cryptographic device access unit 32 proceeds to S612 shown in FIG 18. The cryptographic device access unit 32 newly generates an arbitrary value which does not exist in the column of the virtual key handle 71 shown in FIG 7 as a virtual key handle corresponding to the generated key handle, and enters the newly generated virtual key handle into the row of the pertinent user ID and the slot ID selected at the S506 in FIG 17, in the user setting file 80. In addition, the cryptographic device access unit 32 newly adds a value of the generated virtual key handle to the column of the virtual key handle 71 in the key object management table 70, adds a value of the cryptographic device ID selected at the S605 to the column of the cryptographic device ID 72, adds a value of the arbitrary slot ID selected at the S606 to the column of the actual slot ID 73, adds a value of the key handle acquired at the S611 to the column of the actual key handle 74, and adds attribute information acquired at the S611 to the column of the attribute information 75 (S612). In addition, the cryptographic device access unit 32 generates a key pair generation response which contains the key pair received at the S612 and which indicates that the generation result is successful (S613) and transmits the key pair generation response to the terminal device 11 (S614).

The terminal device 11 receives the key pair generation response (S615) and finishes the process.

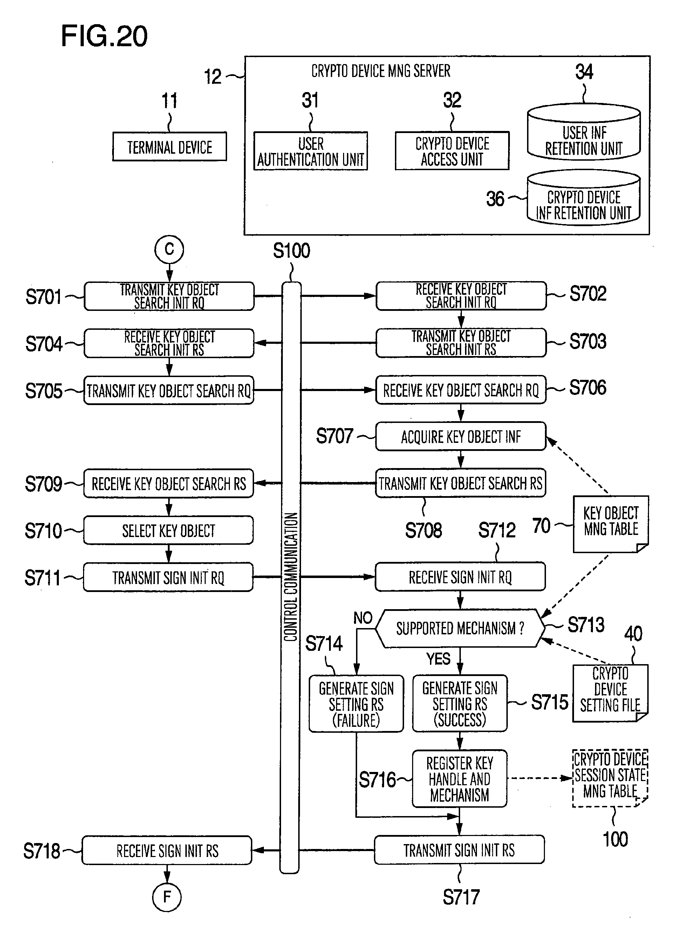

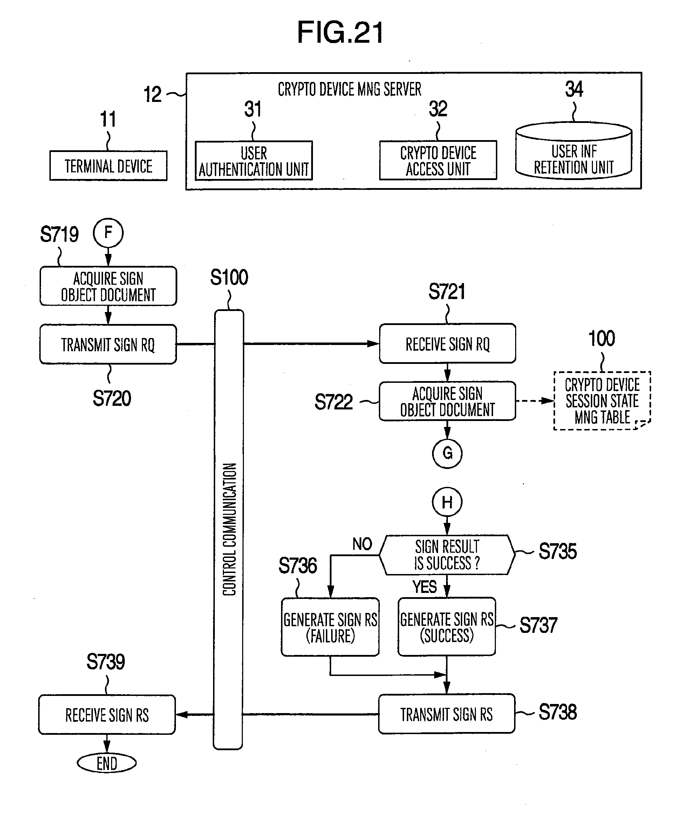

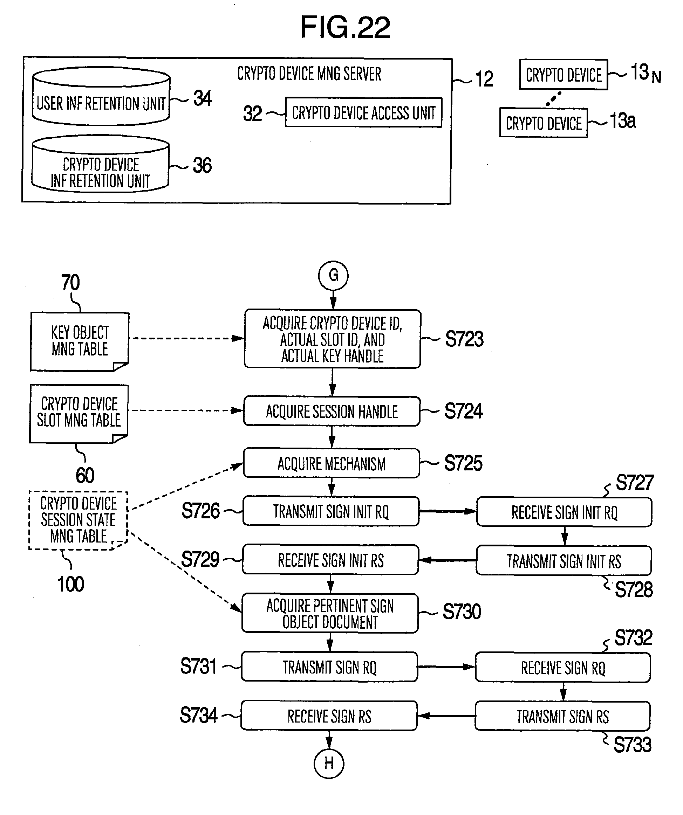

A signature process in the terminal device 11 and the cryptographic device management server 12 will now be described with reference to FIGS. 20 to 22. S701 to S718 are shown in FIG 20, S735 to S739 are shown in FIG 21, and S723 to S734 are shown in FIG 22.

After the initial process shown in FIG 17 is completed, the terminal device 11 transmits a key object search initialization request containing the session handle acquired at the S511 and attribute information specified by the user of the terminal device 11, to the cryptographic device management server 12 (S701).

Upon receiving the key object search initialization request (S702), the cryptographic device access unit 32 stores the attribute information contained in the request and transmits a key object search initialization response (S703).

The terminal device 11 receives the key object search initialization response (S704). If the result is a success, the terminal device 11 transmits a key object search request containing the session handle acquired at the S511 to the cryptographic device management server 12 (S705).

Upon receiving the key object search request (S706), the cryptographic device access unit 32 conducts retrieval in the key object management table 70 stored in the cryptographic device information holding unit 36 by using the attribute information acquired at the S702 as a retrieval key, acquires a virtual key handle (S707), and transmits the virtual key handle to the terminal device 11 as a key object search response (S708).

Upon receiving of a key the key object search response (S709), the terminal device 11 selects an arbitrary key handle from information of a key object contained in the response (S710). The terminal device 11 transmits a sign initialization (init) request containing the session handle acquired at the S511, a signature mechanism selected by the user of the terminal device 11, and the key handle selected at the S710 to the cryptographic device management server 12 (S711).

Upon receiving the sign initialization request (S712), the cryptographic device access unit 32 conducts retrieval in the column of the virtual key handle 71 in the key object management table 70 by using the key handle acquired at the S712 as a searched key, acquires a cryptographic device ID storing a key object corresponding to a found virtual key handle from the column of the cryptographic device ID 72, and ascertains whether the pertinent cryptographic device 13 supports the signature mechanism acquired at the S712, by referring to the cryptographic device setting file 40. If it is found as a result of the ascertainment that the pertinent cryptographic device 13 does not support the signature mechanism (No at S713), the cryptographic device access unit 32 generates a sign initialization response to the effect that the result is a failure (S714) and proceeds to S717. If it is found as a result of the ascertainment that the pertinent cryptographic device 13 supports the signature mechanism (Yes at the S713), then the cryptographic device access unit 32 generates a sign initialization response to the effect that the result is a success (S715), enters the key handle acquired at the S712 into the column of the virtual key handle 104 in the row of the pertinent user ID and virtual session handle in the cryptographic device session state management table 100, and enters the key handle acquired at the S712 into the column of the mechanism 105 in that row (S716). In addition, the cryptographic device access unit 32 transmits a sign initialization response to the terminal device 11 (S717).

The terminal device 11 receives the sign initialization response (S718) and proceeds to S719 shown in FIG 21. The terminal device 11 acquires an object to be signed stored in the external storage device 113 in the terminal device 11 (S719), and transmits a sign request containing the session handle acquired at the S511 and the object to be signed (S720).

Upon receiving the sign request (S721), the cryptographic device access unit 32 acquires the object to be signed contained in the sign request, enters the object to be signed into a row of the pertinent user ID and virtual session handle in the cryptographic device management table 100 (S722), and proceeds to S723 shown in FIG 22. The cryptographic device access unit 32 conducts retrieval in the column of the virtual key handle 71 in the key object management table 70 by using the key handle acquired at the S712 as a retrieval key, and acquires a cryptographic device ID, an actual slot ID, and an actual key handle corresponding to the found virtual key handle from the columns of the cryptographic device ID 72, the actual slot ID 73, and the actual key handle 74 (S723). In addition, the cryptographic device access unit 32 acquires a session handle by using the cryptographic device ID and the actual slot ID acquired at the S723 as a retrieval key (S724). Furthermore, the cryptographic device access unit 32 acquires a mechanism from the cryptographic device session state management table 100 by using the virtual key handle acquired at the S712 as a retrieval key (S725). The cryptographic device access unit 32 transmits a sign initialization request (cryptographic calculation request) containing the session handle acquired at the S724, the mechanism acquired at the S725, and the key handle acquired at the S723 to the cryptographic device 13 (S726).

Upon receiving the sign initialization request (S727), the cryptographic device 13 stores the key handle and mechanism contained in the request and transmits a sign initialization response (S728).

Upon receiving the sign initialization response (cryptographic calculation result) (S729), the cryptographic device access unit 32 acquires the object to be signed from the cryptographic device session state management table 100 (S730). The cryptographic device access unit 32 transmits a sign request (cryptographic calculation request) containing the session handle acquired at the S506 and the object to be signed acquired at the S730 to the cryptographic device 13 (S731).

Upon receiving the sign request (S732), the cryptographic device 13 conducts a signature process by utilizing the key handle and the mechanism acquired at the S727, and transmits a signature value to the cryptographic device access unit 32 as a response (S733).

Upon receiving the sign response (cryptographic calculation result) (S734), the cryptographic device access unit 32 proceeds to S735 shown in FIG 21. Unless a sign response from the cryptographic device received at the S734 is a success (No at the S735), the cryptographic device access unit 32 generates a sign response to the effect that the signature result is a failure (S736). If the signature result is a success (Yes at the S735), the cryptographic device access unit 32 generates a sign response to the effect that the signature result is a success (S737). The cryptographic device access unit transmits the generated sign response to the terminal device 11 (S738).

Upon receiving the sign response (S739), the terminal device 11 acquires the signature value and finishes the signature process.

Heretofore, an embodiment of the present invention has been described in detail. According to the embodiment, cryptographic calculations utilizing a plurality of cryptographic devices 13 can be conducted simply and quickly. As a result, it becomes possible to newly install additional cryptographic devices 13. The cryptographic scheme can be expanded flexibly by installing additional cryptographic devices corresponding to a new cryptographic scheme.

The present invention is not restricted to the embodiment. For example, in some cryptographic devices, a part of the function may be implemented by using a cryptographic device library installed in the cryptographic device management server. In this way, various changes can be made without departing from the spirit of the present invention.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A cryptographic device management method of causing a cryptographic device management server (12) connected to a plurality of terminal devices and a plurality of cryptographic devices to receive a first cryptographic calculation request from an arbitrary terminal device (11m) via a network (14), transmit a second cryptographic calculation request to a cryptographic device (13n) selected on the basis of management information of the terminal devices and management information of the cryptographic devices stored in a storage unit (30b) in the cryptographic device management server, via a connection interface (15), receive a second cryptographic calculation result from the cryptographic device (13n), and transmit a first cryptographic calculation result to the terminal device (11m) of the source of the first cryptographic calculation request via the network (14),
the cryptographic device management method causing the cryptographic device management server (12) to execute:
a process for updating management information of the terminal device and management information of the cryptographic device stored in the storage unit on the basis of the first cryptographic calculation request and the second cryptographic calculation result;
a process for generating the second cryptographic calculation request on the basis of the first cryptographic calculation request, the management information of the terminal device, and the management information of the cryptographic device; and
a process for generating the first cryptographic calculation result on the basis of the second cryptographic calculation result, the management information of the terminal device, and the management information of the cryptographic device.

2. The cryptographic device management method according to claim 1, wherein the management information of the terminal device (11m) comprises information concerning a slot existing in the cryptographic device management server assigned to the terminal device, information concerning an access state of the terminal device to the cryptographic management server (12), and information concerning a session state of the slot existing in the cryptographic device management server assigned to the terminal device.

3. The cryptographic device management method according to claim 1 or 2, wherein the management information of the cryptographic device (13n) comprises information concerning a cryptographic scheme supported by the cryptographic device, information concerning slots existing in the cryptographic device, and information concerning key objects existing in the cryptographic device.

4. The cryptographic device management method according to claim 1, 2 or 3,
wherein when introducing the cryptographic device (13n), the cryptographic device management server (12) executes a process for acquiring the information concerning the cryptographic scheme supported by the cryptographic device and the information concerning the slots existing in the cryptographic device and updating the management information of the cryptographic device, via the connection interface (15).

5. The cryptographic device management method according to one of claims 1-4, wherein in the process for updating the management information of the cryptographic device (13n), the cryptographic device management server (12) executes a process for making a decision whether the cryptographic scheme supported by the cryptographic device is in a state in which security is lowered or jeopardized.

6. The cryptographic device management method according to one of claims 1-5, wherein when activating the cryptographic device, the cryptographic device management server (12) executes a process for acquiring the information concerning the slots existing in the cryptographic device (13n) and information concerning the key objects existing in the cryptographic device via the connection interface (15) and updating the management information of the cryptographic device.

7. The cryptographic device management method according to one of claims 1-6, wherein when the terminal device (11m) accesses, the cryptographic device management server (12) executes a process for authenticating the terminal device on the basis of the management information of the terminal device via the network (14).

8. A cryptographic device management server (12) connected to a plurality of terminal devices and a plurality of cryptographic devices to cause a control unit (33) to receive a first cryptographic calculation request from an arbitrary terminal device (11m) via a network (14), transmit a second cryptographic calculation request to a cryptographic device (13n) selected on the basis of management information of the terminal devices and management information of the cryptographic devices stored in a storage unit (30b) in the cryptographic device management server, via a connection interface (15), receive a second cryptographic calculation result from the cryptographic device (13n), and transmit a first cryptographic calculation result to the terminal device (11m) of the source of the first cryptographic calculation request via the network (14), wherein
the control unit (33) executes:
a process for updating management information of the terminal device and management information of the cryptographic device stored in the storage unit on the basis of the first cryptographic calculation request and the second cryptographic calculation result;
a process for generating the second cryptographic calculation request on the basis of the first cryptographic calculation request, the management information of the terminal device, and the management information of the cryptographic device; and
a process for generating the first cryptographic calculation result on the basis of the second cryptographic calculation result, the management information of the terminal device, and the management information of the cryptographic device.

9. The cryptographic device management server (12) according to claim 8, wherein the management information of the terminal device (11m) comprises information concerning a slot existing in the cryptographic device management server assigned to the terminal device, information concerning an access state of the terminal device to the cryptographic management server (12), and information concerning a session state of the slot existing in the cryptographic device management server assigned to the terminal device.

10. The cryptographic device management server (12) according to claim 8 or 9, wherein the management information of the cryptographic device (13n) comprises information concerning a cryptographic scheme supported by the cryptographic device, information concerning slots existing in the cryptographic device, and information concerning key objects existing in the cryptographic device.

11. The cryptographic device management server (12) according to claim 8, 9 or 10, wherein when introducing the cryptographic device (13n), the control unit (33) executes a process for acquiring the information concerning the cryptographic scheme supported by the cryptographic device and the information concerning the slots existing in the cryptographic device and updating the management information of the cryptographic device, via the connection interface (15).

12. The cryptographic device management server (12) according to one of claims 8-11, wherein in the process for updating the management information of the cryptographic device (13n), the control unit (33) executes a process for making a decision whether the cryptographic scheme supported by the cryptographic device is in a state in which security is lowered or jeopardized.

13. The cryptographic device management server (12) according to one of claims 8-12, wherein when activating the cryptographic device, the cryptographic device management server (12) executes a process for acquiring the information concerning the slots existing in the cryptographic device (13n) and information concerning the key objects existing in the cryptographic device via the connection interface (15) and updating the management information of the cryptographic device.

14. The cryptographic device management server (12) according to one of claims 8-13, wherein when the terminal device (11m) accesses, the control unit (33) executes a process for authenticating the terminal device on the basis of the management information of the terminal device via the network.
